# EUROPÄISCHE PATENTSCHRIFT

(11) **EP 1 084 287 B1**
(45) Veröffentlichungstag und Bekanntmachung des Hinweises auf die Patenterteilung: **23.06.2004**
(21) Anmeldenummer: 99923464.4
(22) Anmeldetag: 26.04.1999
(51) Int. Cl.: D01F 1/10, C08L 23/10, C08L 67/02

(54) **EMULSIONS-POLYTETRAFLUORETHYLEN-MIKROPULVER ALS ADDITIV FÜR FASERBILDENDE KUNSTSTOFFE**
EMULSION POLYTETRAFLUORETHYLENE MICRO-POWDER AS AN ADDITIVE FOR FIBRE-FORMING PLASTICS
POLYTETRAFLUORETHYLENE EN EMULSION SOUS FORME MICROPULVERULENTE S'UTILISANT COMME ADDITIF POUR DES MATIERES PLASTIQUES FIBROGENES

(30) Priorität: 02.05.1998 DE 19819682
(43) Veröffentlichungstag der Anmeldung: 21.03.2001
(73) Patentinhaber: Dyneon GmbH & Co. KG, 84504 Burgkirchen (DE)
(72) Erfinder: KLOOS, Friedrich, D-84556 Kastl (DE); NEUMANN, Wolfgang, D-84559 Kraiburg (DE); GRIFFITHS, Peter, Worsley, Manchester M28 2RX (GB)
(74) Vertreter: Voortmans, Gilbert J.L.
(86) Internationale Anmeldenummer: PCT/EP1999/002806
(87) Internationale Veröffentlichungsnummer: WO 1999/057346

(56) Entgegenhaltungen:
- EP-A- 0 113 114
- EP-A- 0 822 226
- WO-A-97/37828
- DE-A- 2 822 438
- US-A- 3 334 157
- PATENT ABSTRACTS OF JAPAN vol. 095, no. 009, 31. Oktober 1995 (1995-10-31) & JP 07 145511 A (NIPPON ESTER CO LTD), 6. Juni 1995 (1995-06-06)

## Beschreibung

Die Erfindung bezieht sich auf eine Zusammensetzung, bestehend im wesentlichen aus einer schmelzverspinnbaren Polymerkomponente und untergeordneten Mengen an einem Emulsions-Polytetrafluorethylen(E-PTFE)-Mikropulver mit einem Schmelzpunkt, der so weit oberhalb der Verarbeitungstemperatur der Polymerkomponente liegt, daß das Mikropulver bei der Verarbeitung nicht aufschmilzt, die Verwendung einer solchen Zusammensetzung zur Herstellung von Textilfasermaterial und das so erhaltene Textilfasermaterial wie Filamente, Fasern, Garne oder Flächengebilde.

Niedermolekulares Polytetrafluorethylen (PTFE) mit einem Molgewicht im Bereich von 10⁴ bis 10⁶ g/mol werden als PTFE-Mikropulver oder auch Wachse bezeichnet. Im Gegensatz zu hochmolekularem PTFE mit einem Molgewicht bis zu 10⁸ g/mol haben solche Mikropulver praktisch keine mechanische Festigkeit und können deshalb nicht als Werkstoff technisch eingesetzt werden. Sie finden aber breite Verwendung als Additive zur Verbesserung der Reibung und der Antihaftwirkung, zum Beispiel in Schmiermitteln oder in Antihaftpolituren, wo gute Entformungseigenschaften erforderlich sind. Mikropulver werden außerdem bei Drucktinten, vornehmlich beim Hochglanzdruck eingesetzt. Neben erhöhtem Glanz werden dadurch glattere Oberflächen und bessere Gleiteigenschaften des bedruckten Papiers erreicht (S.V. Gangal, Encyclopedia of Polymer Science and Engineering, Vol. 16, Tetrafluoroethylene Polymers, Seiten 597 bis 598, John Wiley & Sons, 1989).

Bei diesen Anwendungen spielt die Partikelmorphologie eine wesentliche Rolle. Sie wird durch den speziellen Herstellprozeß erzeugt. Geeignete Mikropulver können auch durch γ- oder Elektronenstrahlenabbau von hochmolekularem E-PTFE hergestellt werden. Beim thermischen Abbau wird die Partikelmorphologie verändert, so daß solche Produkte für den erfindungsgemäßen Einsatz ungeeignet sind.

Die abgebauten Produkte werden auf 3 bis 15 µm große Teilchen gemahlen. Die solchermaßen hergestellten Mikropulver werden auch als Abbaumikropulver bezeichnet. Ihre Herstellung ist beispielsweise beschrieben in US-A-3 766 031, US-A-3 838 030, US-A-4 029 870, US-A-4 036 718 und US-A-4 052 278.

Sogenannte Aufbaumikropulver werden durch radikalische Polymerisation in wäßriger Emulsion hergestellt. Unter Emulsionspolymerisation versteht man ein Verfahren, bei dem das Monomer (oder die Monomere) - hier Tetrafluorethylen (und gegebenenfalls geringe Anteile an modifizierendem Comonomer) - mit relativ hohen Konzentrationen an fluorierten Emulgatoren wie Perfluoroctansäuresalzen unter schwachem Rühren zu einer kolloidalen Dispersion umgesetzt wird. Die anfallende Dispersion mit einer Partikelgröße von etwa 50 bis 400 nm, vorzugsweise 100 bis 300 nm, Durchmesser, das sogenannte Primärkorn, wird koaguliert und agglomeriert zu einem Sekundärkorn von 2 bis 15 µm Durchmesser.

Aufbaumikropulver werden bei den meisten Anwendungen mehr oder weniger leicht desintegriert, was für manche Einsatzgebiete sehr vorteilhaft ist.

Die Herstellung solcher Mikropulver ist beispielsweise beschrieben in US-A-2 694 701, US-A-2 700 661, US-A-3 067 262, US-A-3 102 862, US-A-3 103 490, US-A-3 105 824 und US-A-3 956 000.

E-PTFE-Mikropulver sind hochkristallin, haben einen Schmelzpunkt von etwa 300 bis 335 °C und eine Viskosität bei 372 °C im Bereich von 10¹ bis 10⁶ Pas, vorzugsweise 10² bis 10⁵ Pas.

Aus EP-A-0 822 226, Patent Abstracts of Japan, Vol. 95, No. 009 (& JP-A-07 145511), DE-A-28 22 438, EP-A-0 113 114 und US-A-3 334 157 ist bekannt, dass schmelzbare Polymere besser verarbeitbar sind, oder bessere Produkte ergeben, wenn die Polymere feines, konventionelles PTFE-Pulver enthalten. WO-A-97/37 828 nennt beliebiges PTFE-Mikropulver als "foam cell nucleating agent" für die Extrusion von Thermoplasten zur Herstellung von Drahtisolierungen, Umkleidungen, Röhren oder Folien. Maßgeblich ist aber die Geometrie des Extruders.

Es wurde nun gefunden, daß untergeordnete Mengen, vorzugsweise 0,1 bis 10 Gew.-%, insbesondere 0,2 bis 5 Gew.-%, vor allem 0,5 bis 3 Gew.-%, der Mikropulver die Herstellung und Eigenschaften von Fasern und Filamenten deutlich verbessern. Die Erfindung betrifft deshalb entsprechende Zubereitungen und bezieht sich weiterhin auf Zubereitungen in Form von Konzentraten ("masterbatches"), die 10 bis 30 Gew.-%, vorzugsweise 15 bis 25 Gew.-% PTFE enthalten. Diese Konzentrate werden mit dem entsprechenden spinnverarbeitbaren Polymer vor dem Schmelzverspinnen auf die Anwendungskonzentration verdünnt. Insbesondere wird überraschenderweise die Knickscheuerbeständigkeit der Fasern deutlich erhöht und dadurch die Weiterverarbeitung zu textilen Gebilden wie Garne und textile Flächengebilden verbessert. Die so ausgerüsteten Textile zeigen auch eine bessere Schmutzabweisung. Der Zusatz von Mikropulvern erniedrigt auch die scheinbare Viskosität der zu verspinnenden Schmelze, wodurch ein höherer Durchsatz bei einer schonenderen Verspinnung ermöglicht wird. Diese Vorteile werden vor allem bei der Verspinnung von Polypropylen beobachtet.

Als faserbildende Polymerkomponente eignen sich alle Polymere, die üblicherweise in einem thermoplastischen Schmelzspinnverfahren verarbeitet werden, wie zum Beispiel Polyolefine, Polyester oder Polyamide, wobei die Schmelze bekanntermaßen Zusätze wie Farbpigmente, Stabilisatoren oder Gleitmittel enthalten kann.

Die Verarbeitungstemperatur der Verspinnung beziehungsweise Faserherstellung muß deutlich unterhalb des Schmelzpunktes des zugesetzten Mikropulvers liegen, das heißt das Mikropulver soll nicht, auch nicht partiell, bei der Schmelzverspinnung aufschmelzen. Dies kann aus dem DSC-Diagramm des Mikropulvers in einfacher Weise beurteilt werden.

Wie mikroskopische Untersuchungen von Fasern, die erfindungsgemäß unter Zusatz von Mikropulvern hergestellt wurden, zeigen, befindet sich überraschenderweise das Mikropulver praktisch ausschließlich an der Oberfläche der Faser, wodurch sich sein vorteilhafter Einfluß bei der Verspinnung und bei den Weiterverarbeitungseigenschaften erklären läßt. Bei der Faserextrusion wird das Sekundärkorn weitgehend zerkleinert und an die Oberfläche der Faser gedrängt.

Das zugesetzte Mikropulver soll bei der Verspinnung nicht in wesentlichem Ausmaß fibrillieren, das heißt die Partikel dürfen nicht stromlinienförmig deformiert werden. Dadurch wird der Transport an die Faseroberfläche behindert beziehungsweise unterbunden. Die Fibrillierung der Mikropulverpartikel kann durch Absenkung des Molgewichtes auf unter 8 · 10⁵ g/mol, was einer Schmelzviskosität von 10⁵ Pas entspricht, unterdrückt werden. Mikropulver mit diesem Molgewicht sind deshalb bevorzugt.

Das zugesetzte Mikropulver sollte außerdem möglichst wenig aus dem Herstellverfahren stammenden Hilfschemikalien und chemisch aggressive Endgruppen enthalten. Diese Komponenten können bei der Verarbeitungstemperatur die Polymerkomponente, zum Beispiel bei Polyestern, abbauen oder die meist notwendigen Zusätze wie Stabilisatoren, Farbstoffe oder Gleitmittel chemisch verändern. PTFE-Mikropulver sollten insbesondere frei sein von Carboxylfluorid-Gruppen (COF), wie sie besonders beim Strahlenabbau erzeugt werden. Solche Produkte werden deshalb zweckmäßig in bekannter Weise nachbehandelt. Bei Aufbaumikropulvern können vorteilhaft durch Behandlung mit Ammoniak neutral reagierende Carboxylamidendgruppen (CONH₂) erzeugt werden (EP-A-0 780 403).

Das PTFE-Mikropulver ist im wesentlichen ein Tetrafluorethylenhomopolymer, das geringfügig auch mit anderen Comonomeren modifiziert sein kann. Als Comonomere kommen alle Olefine in Betracht, die mit Tetrafluorethylen copolymerisieren, wie zum Beispiel Hexafluorpropylen, Perfluoroxyalkylvinylether mit Alkylresten von 1 bis 4 C-Atomen, Vinylidenfluorid, Ethylen oder Propylen. Diese "Modifizierung" kann auch durch Vinylester und Acrylmonomere erfolgen. Der Modifizierungsgrad soll 0,3 Mol-%, vorzugsweise 0,1 Mol-%, nicht überschreiten, damit der chemische Charakter und die physikalischen Eigenschaften des PTFE-Mikropulvers im wesentlichen erhalten bleiben und das Polymer nicht aus der Schmelze verformbar ist. Das modifizierte Mikropulver soll wie das unmodifizierte Mikropulver chemisch inert sein und allenfalls geringe Wechselwirkungen mit den Komponenten der Spinnschmelze haben.

Einzelheiten der Erfindung werden in den folgenden Beispielen erläutert:

### Meßmethoden:

Die Feinheit der Filamente/Fasern wird nach DIN-EN-ISO 21973 bestimmt (Einheit dtex), die Festigkeit und Dehnung nach DIN-EN-ISO 25079 (Einheit cN/tex und %).

Die Bestimmung der Knickscheuerbeständigkeit (KSB) der Filamente oder Fasern erfolgt auf einem von der Hoechst Trevira GmbH & Co KG entwickelten Gerät. Hierbei werden die Fasern unter einer definierten Vorspannung von 0,45 cN/dtex über einen VA-Draht der Dicke von 0,05 mm unter einem Winkel von 110° mit einer Prüfgeschwindigkeit von 126 Doppelhuben/min geknickt und die Anzahl der Knickungen bis zum Bruch der Fasern registriert. Um eine statistisch abgesicherte Aussage gewährleisten zu können, werden mindestens 25 Einzelproben vermessen. Je höher die Zahl der Knickungen bis zum Bruch ist, um so besser ist die KSB der Fasern.

### Schmelzindex (MFR):

Nach ISO 1133 beziehungsweise DIN 53735.

### Schmelzpunktbestimmung:

Nach DIN ISO 3146, Verfahren C,
DSC (differential scanning calorimetry):
Einwaage: circa 10 mg
Heizrate: 10 °C/min
Gerät: Perkin Elmer DSC 4.

### Vergleichsbeispiel A und Beispiele 1 bis 5

Die in den Beispielen 1 bis 9 eingesetzten Mikropulver sind Aufbaumikropulver, das heißt durch Emulsionspolymerisation hergestellt.

Auf einer Laborspinnanlage werden unter Einsatz eines handelsüblichen Polypropylens mit einem Schmelzindex von 8 g/10 min bei 230 °C und einer Belastung von 2,16 kg (MFR 230/2) Filamente mit einem Endtiter von circa 20 dtex bei 260 °C hergestellt. Zur Verbesserung der Lichtbeständigkeit werden dem Polypropylen als Batch 0,25 Gew.-% eines HALS-Stabilisators (hindered amine light stabilizer) zugesetzt. Die Filamente werden in einer Staukammer gekräuselt, auf eine Stapellänge von 80 mm geschnitten und die KSB gemessen (Vergleichsbeispiel A).

Erfindungsgemäß werden der obigen Polypropylenzubereitung verschiedene Mengen eines handelsüblichen E-PTFE-Mikropulvers mit einem Schmelzpunkt von 318 °C und einer Schmelzviskosität von 3 · 10⁴ Pas bei 372 °C zugesetzt und unter gleichen Bedingungen verarbeitet (Beispiele 1 bis 5). Die Ergebnisse zeigt die Tabelle 1.

**Tabelle 1**

| Probe | Gew.-% Mikropulver | Titer dtex | Festigkeit cN/tex | Dehnung % | KSB |
|---|---|---|---|---|---|
| Vergleichsbeispiel A | 0 | 20,1 | 12,2 | 660 | 1037 |
| Beispiel 1 | 0,2 | 20,0 | 12,3 | 630 | 1656 |
| Beispiel 2 | 0,5 | 20,2 | 12,4 | 640 | 2053 |
| Beispiel 3 | 1,0 | 22,4 | 12,1 | 645 | 2512 |
| Beispiel 4 | 2,0 | 21,5 | 12,2 | 615 | 3615 |
| Beispiel 5 | 3,0 | 21,7 | 11,8 | 645 | 4768 |

Wie Tabelle 1 zeigt, wird die KSB schon bei niedrigen Zusätzen deutlich erhöht und bei einem Zusatz von 3 Gew.-% um den Faktor 4 bis 5 verbessert.

### Vergleichsbeispiel B und Beispiel 6 und 7

Auf einer Produktionsspinnanlage wird Polypropylen mit dem MFR 230/2 von 11,3 g/10 min mit 1 Gew.-% eines Stabilisatorbatch und 1 Gew.-% eines Farbbatch zu gekräuselten Stapelfasern mit einer Stapellänge von 80 mm und einem Titer von circa 15 dtex verarbeitet. Die Verarbeitungstemperatur beträgt 270 °C (Vergleichsbeispiel B).

In weiteren Versuchen wird der Mischung ein Batch, bestehend aus 80 % Polypropylen und 20 % eines handelsüblichen Mikropulvers mit einem Schmelzpunkt von 312 °C und einer Schmelzviskosität von 6,7 · 10³ Pas bei 372 °C in einer Menge zugesetzt, daß die Konzentration von PTFE in der Polymermischung 1 beziehungsweise 2 Gew.-% beträgt und bei gleichen Bedingungen verarbeitet und die KSB gemessen. Die Ergebnisse zeigt die Tabelle 2.

**Tabelle 2**

| Probe | Gew.-% Mikropulver | Titer dtex | KSB |
|---|---|---|---|
| Vergleichsbeispiel B | 0 | 14,9 | 1873 |
| Beispiel 6 | 1 | 15,7 | 4782 |
| Beispiel 7 | 2 | 15,3 | 5899 |

Tabelle 2 demonstriert die Verbesserung der KSB durch Zusatz eines Mikropulvers mit einer im Vergleich zu Beispiel 1 bis 5 um den Faktor 5 niedrigeren Schmelzviskosität.

Bei der Herstellung der Fasern nach Beispiel 1 bis 7 treten trotz Zusatz von Mikropulvern keine Spinn- und Verstreckunregelmäßigkeiten, wie zum Beispiel vermehrte Spinnbrüche, auf.

### Vergleichsbeispiel C

Analog zu Beispiel 2 wird ein handelsübliches, über thermisch-mechanischen Abbau eines hochmolekularen E-PTFE erhaltenes PTFE-Abbaumikropulver mit einer mittleren Teilchengröße von 4,2 µm, einem Schmelzpunkt von 310 °C und einer Schmelzviskosität von 3,4 · 10⁴ Pas eingesetzt und die KSB gemessen. Die KSB von Beispiel 2 wird zu 2053 ± 300 und die des Vergleichsbeispiels C zu 1283 ± 1095 gefunden. Mikroskopische Untersuchungen zeigen, daß die Partikel des Abbaumikropulvers bei der Schmelzverspinnung nur unzureichend desintegrieren und nicht hinreichend quantitativ aus der Faser an die Faseroberfläche gedrängt werden. Damit wird die große Schwankung der beobachteten KSB plausibel.

### Vergleichsbeispiel D und Beispiele 8 und 9

Auf einer Laborspinnanlage wird ein handelsübliches Polyethylenteraphthalat (PET) mit einer Lösungsviskosität von 0,66 dl/g, gemessen in Dichloressigsäure bei einer Konzentration von 1 Gew.-%, das zu einer mittleren Korngröße d₅₀ = 4,7 µm gemahlen wird, bei 280 °C zu Filamenten versponnen, die dann in einem zweiten Verarbeitungsgang zu texturierten Garnen mit einem Einzeltiter von 3,4 dtex weiterverarbeitet werden. In weiteren Versuchen wird das PET mit 1 beziehungsweise 2 Gew.-% eines Mikropulvers mit einem d₅₀ von 3,5 µm, einem Schmelzpunkt von 319 °C und einer Schmelzviskosität von 6 · 10³ Pas homogen gemischt und diese Mischung unter den gleichen Verarbeitungsbedingungen versponnen und die KSB gemessen.

**Tabelle 3**

| Probe | % PTFE | KSB |
|---|---|---|
| Vergleichsbeispiel D | 0 | 1719 |
| Beispiel 8 | 1 | 2620 |
| Beispiel 9 | 2 | 4221 |

### Vergleichsbeispiel E

Das Experiment wie Beispiel 8 wird wiederholt mit dem Unterschied, daß dem PET 0,5 Gew.-% eines auf 5,0 µm gemahlenen hochmolekularen PTFE-Emulsionspolymerisates anstelle des Mikropulvers zugesetzt wird. Schon dieser geringe Zusatz verschlechtert den Spinnprozeß in nicht akzeptabler Weise. Offensichtlich sind hochmolekulare Emulsionspolymerisate für diese Anwendung ungeeignet.

## Patentansprüche

1. Zusammensetzung zur Herstellung von Textilfasermaterial, bestehend im wesentlichen aus einer schmelzverspinnbaren Polymerkomponente und untergeordneten Mengen an einem Emulsions-Polytetrafluorethylen-Mikropulver mit einem Molgewicht im Bereich von 10⁴ bis 10⁶ g/mol und mit einem Schmelzpunkt, der so weit oberhalb der Verarbeitungstemperatur der Polymerkomponente liegt, daß das Mikropulver bei der Verarbeitung nicht aufschmilzt, wobei ein thermisch abgebautes Mikropulver ausgeschlossen ist.

2. Zusammensetzung nach Anspruch 1, **dadurch gekennzeichnet, daß** sie 0,1 bis 10 Gew.-%, vorzugsweise 0,2 bis 5 Gew.-%, insbesondere 0,5 bis 3 Gew.-%, Mikropulver enthält.

3. Zusammensetzung nach Anspruch 1, **gekennzeichnet durch** einen Gehalt an 10 bis 30 Gew.-%, vorzugsweise 15 bis 25 Gew.-%, Polytetrafluorethylen.

4. Zusammensetzung nach einem oder mehreren der vorhergehenden Ansprüche, **dadurch gekennzeichnet, daß** das Polytetrafluorethylen-Mikropulver bis zu 0,3 Mol-%, vorzugsweise bis zu 0,1 Mol-%, an mit Tetrafluorethylen-copolymerisierbaren Comonomeren enthält.

5. Verwendung einer Zusammensetzung nach einem oder mehreren der Ansprüche 1 bis 4 zur Herstellung von Textilfasermaterial.

6. Textilfasermaterial, bestehend im wesentlichen aus einer schmelzverspinnbaren Polymerkomponente und untergeordneten Mengen an einem Emulsions-Polytetrafluorethylen-Mikropulver mit einem Schmelzpunkt, der so weit oberhalb der Verarbeitungstemperatur der Polymerkomponente liegt, daß das Mikropulver bei der Verarbeitung nicht aufschmilzt.

7. Textilfasermaterial nach Anspruch 6, **dadurch gekennzeichnet, daß** das Material ein Filament, eine Faser, ein Garn oder ein Flächengebilde ist.

## Claims

1. Composition for producing textile fibre material consisting essentially of a melt-spinnable polymer component and minor amounts of an emulsion polytetrafluoroethylene micropowder having a molecular weight in the range from 10⁴ to 10⁶ g/mol and having a melting point sufficiently far above the processing temperature of the polymer component for the micropowder not to melt during the processing of the polymer component, although a thermally degraded micropowder shall be excluded.

2. Composition according to Claim 1, **characterized in that** it includes 0.1 to 10% by weight, preferably 0.2 to 5% by weight, especially 0.5 to 3% by weight, of micropowder.

3. Composition according to Claim 1, **characterized by** a content of 10 to 30% by weight, preferably 15 to 25% by weight, of polytetrafluoroethylene.

4. Composition according to one or more of the preceding claims, **characterized in that** the polytetrafluoroethylene micropowder includes up to 0.3 mol%, preferably up to 0.1 mol%, of comonomer copolymerizable with tetrafluoroethylene.

5. Use of a composition according to one or more of Claims 1 to 4 for producing textile fibre material.

6. Textile fibre material consisting essentially of a melt-spinnable polymer component and minor amounts of an emulsion polytetrafluoroethylene micropowder having a melting point sufficiently far above the processing temperature of the polymer component for the micropowder not to melt during the processing of the polymer component.

7. Textile fibre material according to Claim 6, **characterized in that** the material is a filament, a fibre, a yarn or a fabric.

## Revendications

1. Composition pour la préparation d'un matériau fibreux textile, constituée essentiellement d'un composant polymère filable à partir de la masse fondue et de quantités secondaires d'une micropoudre de polytétrafluoroéthylène en émulsion présentant un poids moléculaire dans la plage de 10⁴ à 10⁶ g/mole et un point de fusion qui est supérieur à la température de transformation du composant polymère de telle manière que la micropoudre ne fond pas lors de la transformation, une micropoudre dégradée thermiquement étant exclue.

2. Composition selon la revendication 1, **caractérisée en ce qu'**elle contient 0,1 à 10% en poids, de préférence 0,2 à 5% en poids, en particulier 0,5 à 3% en poids de micropoudre.

3. Composition selon la revendication 1, **caractérisée par** une teneur de 10 à 30% en poids, de préférence de 15 à 25% en poids, en polytétrafluoroéthylène.

4. Composition selon l'une ou plusieurs des revendications précédentes, **caractérisée en ce que** la micropoudre de polytétrafluoroéthylène contient jusqu'à 0,3% en mole, de préférence jusqu'à 0,1% en mole de comonomères copolymérisables avec le tétrafluoroéthylène.

5. Utilisation d'une composition selon l'une ou plusieurs des revendications 1 à 4 pour la fabrication d'un matériau fibreux textile.

6. Matériau fibreux textile, essentiellement constitué d'un composant polymère filable à partir de la masse fondue et de quantités secondaires d'une micropoudre de polytétrafluoroéthylène en émulsion présentant un point de fusion supérieur à la température de transformation du composant polymère de telle manière que la micropoudre ne fond pas lors de la transformation.

7. Matériau fibreux textile selon la revendication 6, **caractérisé en ce que** le matériau est un filament, une fibre, un fil ou une structure plane.
